# EUROPEAN PATENT SPECIFICATION

(11) **EP 1 902 903 B1**
(45) Date of publication and mention of the grant of the patent: **05.01.2011**
(21) Application number: 06120998.7
(22) Date of filing: 20.09.2006
(51) Int. Cl.: B60R 13/02, F16B 11/00, F16B 37/04

(54) **Fixing element for vehicle lining and method for fixing vehicle lining using same**
Befestigungselement für eine Innenverkeidung und Verfahren zum Verwenden desselben
Attache pour garniture de véhicule et sa méthode d'utilisation

(43) Date of publication of application: 26.03.2008
(73) Proprietor: Hebic, 2850 Boom (BE)
(72) Inventor: De Winter, Mathias, 2000 Antwerpen (BE)
(74) Representative: Sarlet, Steven Renaat Irène

(56) References cited:
- EP-B1- 0 741 842
- DE-A1- 4 213 366
- DE-A1-102004 031 551
- DE-U1-202005 007 822
- US-A- 4 433 930
- US-A- 4 971 647

## Description

### Technical field

The present invention relates to a fixing element for fixing structural elements to a metal support structure, more particularly plate-like interior lining elements or other interior elements to a vehicle support structure. The present invention further relates to a method for fixing structural elements to a metal support structure by means of these fixing elements.

### Background art

DE 42 13 366 A1 relates to a fixing element for detachably fixing lining plates to a support structure in a vehicle. The fixing element comprises a bolt for supporting the lining plates and a retainer clip which is press-fitted on the bolt to achieve a fluid-tight connection. The bolt can be either welded to or screwed through the support structure. The fluid-tight connection between the bolt and the retainer clip is said to prevent corrosion of the support structure of the vehicle.

However, with the fixing element known from DE 42 13 366 A1, there is still a high risk of corrosion of the support structure. Since the bolt is taught to be either welded to or screwed through the support structure, there is always damage to the paint coating which is applied on vehicle support structures to provide protection against corrosion.

DE 10 2004 031 551 A1 relates to a fixing element for use in fastening to a substrate. The fixing element comprises a bottom side which is provided to be fixed to the substrate. The bottom side comprises one or more spacers which protrude from the bottom side and define a space between the bottom side and the substrate which is provided to accommodate adhesive. The bottom side further comprises a receiving recess that is provided to receive a compact of hot melt adhesive.

### Disclosure of the invention

It is an aim of the present invention to provide a fixing element for fixing structural elements to a metal support structure, with which the risk of corrosion of the support structure can be minimised.

This aim is achieved according to the invention with a fixing element showing the technical characteristics of the first claim.

The fixing element of the invention is generally intended for fixing structural elements to a metal support structure. More in particular, the fixing element of the invention is intended for fixing interior elements to support structures provided in vehicles. The interior elements can for example be plate-like interior lining elements, storage compartments, hooks, cables, or any other structural elements known to the person skilled in the art.

The fixing element of the invention comprises at least a first part with a bottom side which is provided to be fixed to the support structure. The bottom side is provided with one or more spacer ribs which protrude from the bottom side for maintaining a space between the bottom side and the support structure. This space is provided for accommodating a glue layer, so that the fixing element can be fixed to the support structure by means of a suitable glue.

The fact that the fixing element of the invention can be fixed to the support structure by means of glue has the advantage that no holes have to be drilled in the support structure and that no welding has to occur. As a result, the protective paint coating on the support structure is left untouched and the risk that corrosion occurs on the locations where the fixing parts of the invention are fixed is no higher than the risk anywhere else on the support structure.

Once placed on the support structure, the spacer ribs function to maintain the space between the bottom side of the first part and the support structure, so that there is room for accommodating a layer of glue. The presence of these ribs also has the advantage that the contact surface between the first part and the glue is increased in comparison with an even bottom surface, so that a strong attachment of the fixing part to the support structure can be achieved.

The first part has a glue application opening via which the space underneath the bottom side is accessible for applying the glue layer. This has the advantage that the glue can be applied while the first part of the fixing element is placed on the support structure, i.e. when the first part is already in place. In this way, it can be ensured that exactly the right amount of glue is applied, so that the attachment of the fixing part to the support structure can be further strengthened.

In a preferred embodiment of the fixing element of the invention, the bottom side and the spacer ribs form part of a thin plate, in which the glue application opening extends from a top side up to the bottom side. In this embodiment, the space for accommodating the glue layer is accessible from above the thin plate, by which the application of the glue can be facilitated.

In a preferred embodiment of the fixing element of the invention, the spacer ribs are located on the bottom side according to a predetermined pattern for evenly distributing the glue which is applied via the glue application opening. In this way, a substantially even layer of glue can be applied underneath the bottom side, which may further strengthen the attachment of the fixing part to the support structure.

In a preferred embodiment of the fixing element of the invention, the first part has a plurality of glue escape openings at the periphery of the bottom side via which excess glue can escape from said space. By means of these escape openings, excess glue is discharged from the space, which is desirable in view of achieving the strongest possible attachment. Furthermore, since the glue escape openings are distributed along the periphery of the first part of the fixing element, the skilled person who applies the glue can easily verify that the complete space is filled with glue.

In a preferred embodiment of the fixing element of the invention, the fixing element further comprises a second part fixable to the first part for retaining a structural element on the first part. The first and second parts are preferably fixable to each other by a means of a snap-fitting arrangement, so that the second part can be fixed easily and quickly.

Preferably, the snap-fitting arrangement comprises one or more resilient teeth on the one part which are provided to engage in one or more complementary grooves on the other part.

In a preferred embodiment of the fixing element of the invention, the resilient teeth are provided around a central opening in the second part, whereas the first part comprises an upstanding support pen on which a plurality of said complementary grooves are provided at various distances from the bottom side of the first part. This embodiment of the invention has the advantage that the fixing element is quickly and easily adaptable to various thicknesses of structural elements.

In a preferred embodiment of the fixing element of the invention, the teeth and grooves are shaped for counteracting detachment of the second part from the first part. In this way, unintentional removal of the second part or the structural element from the first part can be prevented.

With the fixing elements of the invention, structural elements are fixed to a metal support structure as follows. In a first step, the first part of each fixing element is placed with its bottom side on the support structure, after which glue is applied to the space which is maintained by the spacer ribs between the bottom side and the support structure. Glue is applied until the space is substantially completely filled with glue. After the glue has dried and a strong attachment is obtained, the structural elements are suspended on the first parts of the fixing elements.

In the embodiment where the bottom side and the spacer ribs of the first part of the fixing element form part of a thin plate in which a glue application opening extends from a top side up to the bottom side, the glue is applied to the space between the bottom side and the support structure via this glue application opening.

In the embodiment where the first part of the fixing element has a plurality of glue escape openings at the periphery of the bottom side, the glue is applied until excess glue escapes through all of the glue escape openings, so that it is verified that substantially the complete space is filled with glue.

In the embodiment where each fixing element comprises a second part fixable to the first part by means of a snap-fitting arrangement and being provided for retaining a structural element on the first part, the method further comprises the step of snap-fitting a second part to the first part of each fixing element.

In the embodiment where the snap-fitting arrangement of each fixing element comprises a number of resilient teeth around a central opening in each second part which are provided to engage in one of a plurality of complementary grooves on an upstanding support pen of each first part, with the complementary grooves being provided at various distances from the bottom side of the first part, the method further comprises the step of pushing the second parts downwards over the first parts to adapt their positions to the thickness of the structural elements.

### Brief description of the drawings

The invention will be further elucidated by means of the following description and the appended figures.
Figure 1 shows a perspective view of a preferred embodiment of the fixing element of the invention comprising first and second parts fixable to each other, in detached state.
Figure 2 shows a perspective view of the embodiment of figure 1, with the first and second parts fixed to each other.
Figure 3 shows a perspective view on the bottom of the first part of the embodiment of figures 1 and 2.

### Modes for carrying out the invention

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

The term "comprising", used in the claims, should not be interpreted as being restricted to the means listed thereafter; it does not exclude other elements or steps. It needs to be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B. It means that with respect to the present invention, the only relevant components of the device are A and B.

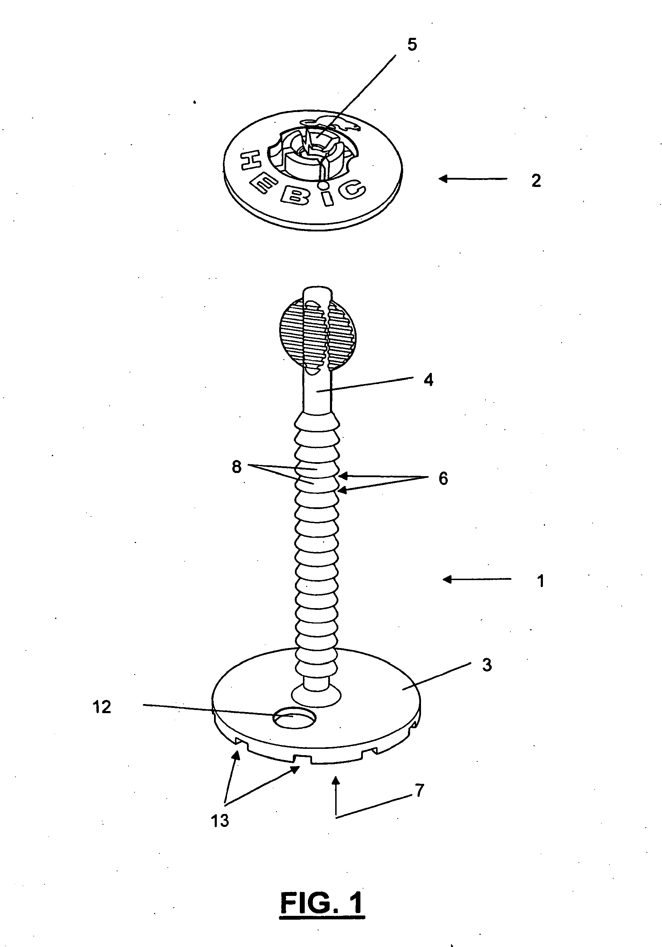

The fixing element of figures 1-3 comprises a first part 1 and a second part 2 which is fixable to the first part 1. The first part 1 comprises a base plate 3 of which the bottom side is adapted to be fixed to a support structure (not shown) by means of glue and an upstanding support pen 4 which is adapted for supporting a structural element such as for example an interior lining element of a vehicle, or any other structural element known to the person skilled in the art. The second part 2 is provided for retaining the structural element on the first part 1. The first and second parts are fixable to each other by a means of a snap-fitting arrangement, as a result of which the second part can be fixed easily and quickly onto the first part.

The snap-fitting arrangement by means of which the first and second parts are fixable onto each other comprises resilient teeth 5 on the second part 2 which are provided to engage in one of a plurality of complementary grooves 6 on the first part 1. The resilient teeth 5 are provided around a central opening in the second part 2 through which the upstanding support pen 4 can pass. The plurality of complementary grooves 6 are provided at various distances from the bottom side 7 of the first part 1. As a result, the fixing element is quickly and easily adaptable to various thicknesses of structural elements.

In alternative embodiments, the snap-fitting arrangement could also be formed by resilient teeth on the first part 1 which engage in one or more grooves in the second part 2, or the two parts 1, 2 could be provided with mating screw-threads enabling them to be screwed onto each other, or other fixing arrangements could be provided. The second part 2 could also be constructed unitary with the structural elements which are intended to be suspended on the first part 1.

The teeth 5 and grooves 6 are shaped for counteracting detachment of the second part 2 from the first part 1. More particularly, the grooves 6 are formed in between corrugations 8 on the support pen 4 which above have a downwards slope enabling the teeth to pass in downwards direction upon application of sufficient force and below have a perpendicular rim (perpendicular to the axis of the support pen) after which the teeth 5 engage upon pulling the second part in upwards direction. In this way, unintentional removal of the second part 2 or the structural element from the first part 1 can be prevented.

The bottom side 7 of the first part 1 is provided with a plurality of spacer ribs 9, 10 which protrude from the bottom side 7 for maintaining a space between the bottom side 7 and the support structure. This space is provided for accommodating a glue layer (not shown), so that the fixing element can be fixed to the support structure by means of a suitable glue. A preferred suitable glue is for example acrylic based two-component adhesive, but any other adhesive deemed suitable by the person skilled in the art may also be used.

The fact that the fixing element 1, 2 can be fixed to the support structure by means of glue has the advantage that no holes have to be drilled in the support structure and that no welding has to occur. As a result, the protective paint coating on the support structure is left untouched and the risk that corrosion occurs on the locations where the fixing parts of the invention are fixed is no higher than the risk anywhere else on the support structure.

Once placed on the support structure, the spacer ribs 9, 10 function to maintain the space between the bottom side 7 of the first part 1 and the support structure, so that there is room for accommodating a layer of glue. The presence of these ribs 9, 10 also has the advantage that the contact surface between the first part 1 and the glue is increased in comparison with an even bottom surface, so that a strong attachment of the fixing part to the support structure can be achieved.

The first part 1 has a glue application opening 12 which extends from the top side of the base plate 3 up to the bottom side 7. Via this opening 12 the space underneath the bottom side 7 is accessible for applying the glue layer. This has the advantage that the glue can be applied while the first part 1 of the fixing element is placed on the support structure, i.e. when the first part 1 is already in place. In this way, it can be ensured that exactly the right amount of glue is applied, so that the attachment of the fixing part to the support structure can be further strengthened.

The spacer ribs 9 are located on an outer circle at the periphery of the base plate 3. The spacer ribs 10 are located on an inner circle which is located inwards from the periphery of the base plate 3. Openings 11 between the spacer ribs 10 enable the flow of glue from the central space underneath the bottom side 7 to the space between the circles 9, 10. The glue is applied via the glue application opening 12 located near the centre and inwards from the inner circle. Together, the ribs 9, 10 form a pattern which functions to evenly distribute the glue which is applied via the glue application opening 12. In this way, a substantially even layer of glue can be applied underneath the bottom side 7 which substantially completely fills the space. This may further strengthen the attachment of the fixing part to the support structure. Instead of the pattern along two circles 9, 10, any other glue distribution pattern deemed suitable by the skilled person may also be provided on the bottom side 7.

The first part 1 has a plurality of glue escape openings 13 at the periphery of the bottom side 7 in between the outer spacer ribs 9 via which excess glue can escape from the space underneath the bottom side 7. By means of these escape openings 13, excess glue is discharged from the space, which is desirable in view of achieving the strongest possible attachment. Furthermore, since the glue escape openings 13 are distributed along the periphery of the first part 1 of the fixing element, the skilled person who applies the glue can easily verify that the complete space is filled with glue.

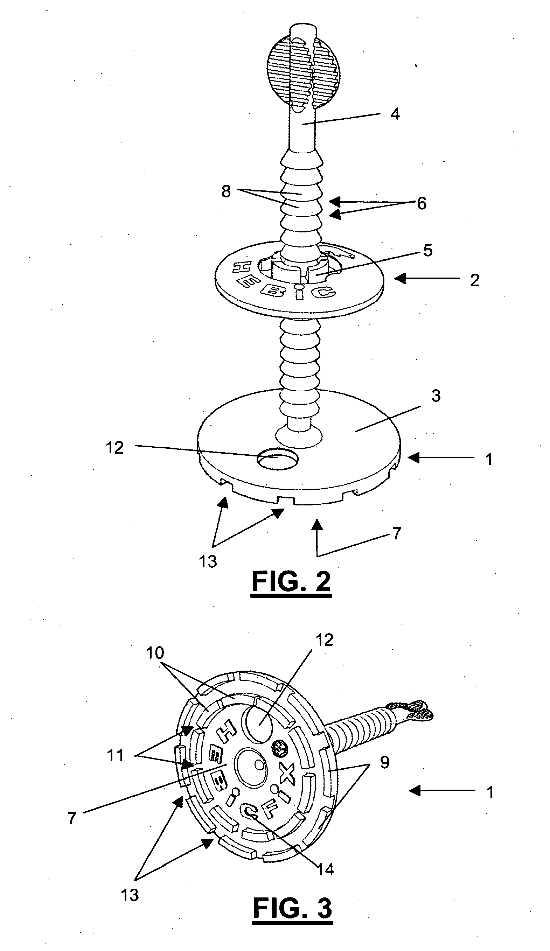

The spacer ribs 9, 10 suitably have a height of about 1 mm in case the glue used is an acrylic bases two-component adhesive, but this distance may of course vary in view of the desired thickness of the glue layer. In general, the height of the spacer ribs 9, 10 is determined in view of the glue which is envisaged, i.e. in view of its properties such as its viscosity and its joint filling properties. Further unevenness may be provided on the bottom side 7 to further enhance the bond between the glue layer and the bottom side, for example in the form of a trade mark 14 as shown in figure 3.

With the fixing element of figures 1-3, a structural element such as for example an interior element is fixed to a metal support structure for example in a vehicle as follows. In a first step, the first part 1 of the fixing element is placed with its bottom side 7 on the support structure. Then, glue is applied via the glue application opening 12 to the space which is maintained by the spacer ribs 9, 10 between the bottom side 7 and the support structure. Glue is applied until the space is substantially completely filled with glue, which is verified by the fact that excess glue escapes through all of the glue escape openings 13. After the glue has dried and a strong attachment is obtained, the structural element is suspended on the upstanding support pen 4. Finally, the second part 2 is placed over the upstanding support pen 4 and pushed downwards until its teeth 5 engage in the groove 6 which corresponds to the thickness of the structural element.

## Claims

1. Fixing element for fixing structural elements to a metal support structure, more particularly plate-like interior lining elements or other interior elements to a vehicle support structure, comprising at least a first part (1) with a bottom side (7) which is provided to be fixed to the support structure, the bottom side (7) being provided with one or more spacer ribs (9, 10) which protrude from the bottom side (7) for maintaining a space between the bottom side (7) and the support structure, said space being provided for accommodating a glue layer, **characterized in that** the first part (1) has a glue application opening (12) via which said space underneath the bottom side is accessible for applying the glue layer while the first part (1) of the fixing element is placed on the support structure.

2. Fixing element according to claim 1, **characterised in that** the bottom side (7) and the spacer ribs (9, 10) form part of a thin plate (3), in which the glue application opening (12) extends from a top side up to the bottom side (7).

3. Fixing element according to claims 1 or 2, **characterised in that** the spacer ribs (9, 10) are located on the bottom side (7) according to a predetermined pattern for evenly distributing the glue which is applied via the glue application opening (12).

4. Fixing element according to any one of the previous claims, **characterised in that** the first part (1) has a plurality of glue escape openings (13) at the periphery of the bottom side (7) via which excess glue can escape from said space.

5. Fixing element according to any one of the previous claims, **characterised in that** the fixing element further comprises a second part (2) fixable to the first part (1) for retaining a structural element on the first part (1), the first and second parts being fixable to each other by a means of a snap-fitting arrangement (5, 6).

6. Fixing element according to claim 5, **characterised in that** said snap-fitting arrangement comprises one or more resilient teeth (5) on the one part which are provided to engage in one or more complementary grooves (6) on the other part.

7. Fixing element according to claim 6, **characterised in that** the resilient teeth (5) are provided around a central opening in the second part (2) and that the first part (1) comprises an upstanding support pen (4) on which a plurality of said complementary grooves (6) are provided at various distances from the bottom side (7) of the first part (1).

8. Fixing element according to claim 6 or 7, **characterised in that** the teeth (5) and grooves (6) are shaped for counteracting detachment of the second part (2) from the first part (1).

9. Method for fixing structural elements to a metal support structure, more particularly plate-like interior lining elements or other interior elements to a vehicle support structure, by means of fixing elements which each comprise at least a first part (1) with a bottom side (7) which is provided with one or more spacer ribs (9, 10) which protrude from the bottom side (7), **characterised in that** it comprises the steps of:
a) placing the first part (1) of each fixing element with its bottom side (7) on the support structure,
b) applying glue to the space which is maintained by the spacer ribs (9, 10) between the bottom side (7) and the support structure until said space is substantially completely filled with glue,
c) suspending the structural elements on the first parts (1) of the fixing elements.

10. Method according to claim 9, **characterised in that** for each fixing element the bottom side (7) and the spacer ribs (9, 10) form part of a thin plate, in which a glue application opening (12) extends from a top side up to the bottom side (7), and that in step b) the glue is applied to said space via the glue application opening (12).

11. Method according to claim 9 or 10, **characterised in that** for each fixing element the first part (1) has a plurality of glue escape openings (13) at the periphery of the bottom side (7), and that in step b) glue is applied until excess glue escapes through all of the glue escape openings (13).

12. Method according to any one of the claims 9-11, further comprising the step of snap-fitting a second part (2) to the first part (1) of each fixing element, said second parts (2) being fixable to the first parts (1) by means of a snap-fitting arrangement (5, 6) and being provided for retaining a structural element on the first parts.

13. Method according to claim 12, **characterised in that** said snap-fitting arrangement comprises a number of resilient teeth (5) around a central opening in each second part (2) which are provided to engage in one of a plurality of complementary grooves (6) on an upstanding support pen (4) of each first part (1), said complementary grooves being provided at various distances from the bottom side (7) of the first part (1), and that the method further comprises the step of pushing the second parts downwards over the first parts to adapt their positions to the thickness of the structural elements.

## Patentansprüche

1. Befestigungselement zum Befestigen von Strukturelementen an einer Metallstützstruktur, insbesondere plattenartige Innenverkleidungselemente oder andere Innenelemente an einer Fahrzeugstützstruktur, umfassend zumindest ein erstes Teil (1) mit einer Bodenseite (7), die zur Befestigung an der Stützstruktur vorgesehen ist, wobei die Bodenseite (7) mit einer oder mehr Abstandsrippen (9, 10) versehen ist, die zum Beibehalten eines Zwischenraums zwischen der Bodenseite (7) und der Stützstruktur von der Bodenseite (7) vorstehen, wobei der Zwischenraum zum Aufnehmen einer Klebstoffschicht vorgesehen ist, **dadurch gekennzeichnet, dass** das erste Teil (1) eine Klebstoffauftragsöffnung (12) aufweist, über die der Zwischenraum unter der Bodenseite zum Auftragen der Klebstoffschicht zugänglich ist, während das erste Teil (1) des Befestigungselements auf der Stützstruktur angeordnet ist.

2. Befestigungselement nach Anspruch 1, **dadurch gekennzeichnet, dass** die Bodenseite (7) und die Abstandsrippen (9, 10) ein Teil einer dünnen Platte (3) bilden, in der die Klebstoffauftragsöffnung (12) von einer Oberseite bis zur Bodenseite (7) verläuft.

3. Befestigungselement nach einem der Ansprüche 1 oder 2, **dadurch gekennzeichnet, dass** sich die Abstandsrippen (9, 10) gemäß einem vorgegebenen Muster zum gleichmäßigen Verteilen des Klebstoffs auf der Bodenseite (7) befinden, welcher über das Klebstoffauftragsloch (12) aufgetragen ist.

4. Befestigungselement nach einem der vorhergehenden Ansprüche, **dadurch gekennzeichnet, dass** das erste Teil (1) mehrere Klebstoffentweichungsöffnungen (13) am Umfang der Bodenseite (7) aufweist, über die überschüssiger Klebstoff aus dem Zwischenraum entweichen kann.

5. Befestigungselement nach einem der vorhergehenden Ansprüche, **dadurch gekennzeichnet, dass** das Befestigungselement ferner ein zweites Teil (2) umfasst, das zum Halten eines Strukturelements auf dem ersten Teil (1) an dem ersten Teil (1) befestigbar ist, wobei das erste und zweite Teil mithilfe einer Schnappverbindungsanordnung (5, 6) aneinander befestigbar sind.

6. Befestigungselement nach Anspruch 5, **dadurch gekennzeichnet, dass** die Schnappverbindungsanordnung einen oder mehr elastische Zähne (5) an dem einen Teil umfasst, die zum Eingreifen in eine oder mehr ergänzende Nute (6) an dem anderen Teil vorgesehen sind.

7. Befestigungselement nach Anspruch 6, **dadurch gekennzeichnet, dass** die elastischen Zähne (5) um eine mittige Öffnung in dem zweiten Teil (2) vorgesehen sind, und dass das erste Teil (1) einen aufrechten Stützstift (4) umfasst, an dem mehrere der ergänzenden Nute (6) in unterschiedlichem Abstand zur Bodenseite (7) des ersten Teils (1) vorgesehen sind.

8. Befestigungselement nach einem der Ansprüche 6 oder 7, **dadurch gekennzeichnet, dass** die Zähne (5) und Nute (6) zur gegenwirkenden Lösung des zweiten Teils (2) von dem ersten Teil (1) geformt sind.

9. Verfahren zum Befestigen von Strukturelementen an einer Metallstützstruktur, insbesondere plattenartige Innenverkleidungselemente oder andere Innenelemente an einer Fahrzeugstützstruktur, mithilfe von Befestigungselementen, die jedes zumindest ein erstes Teil (1) mit einer Bodenseite (7) umfassen, welche mit einer oder mehr Abstandsrippen (9, 10) versehen ist, die von der Bodenseite (7) vorstehen, **dadurch gekennzeichnet, dass** es folgende Schritte umfasst:
a) Anordnen des ersten Teils (1) jeden Befestigungselements mit seiner Bodenseite (7) auf der Stützstruktur,
b) Auftragen von Klebstoff in den Zwischenraum, der durch die Abstandsrippen (9, 10) zwischen der Bodenseite (7) und der Stützstruktur beibehalten ist, bis der Zwischenraum im Wesentlichen vollständig mit Klebstoff gefüllt ist,
c) Aufhängen der Strukturelemente an den ersten Teilen (1) der Befestigungselemente.

10. Verfahren nach Anspruch 9, **dadurch gekennzeichnet, dass** für jedes Befestigungselement die Bodenseite (7) und die Abstandsrippen (9, 10) ein Teil einer dünnen Platte bilden, in der eine Klebstoffauftragsöffnung (12) von einer Oberseite bis zur Bodenseite (7) verläuft, und dass in Schritt b) der Klebstoff über die Klebstoffauftragsöffnungen (12) in den Zwischenraum aufgetragen wird.

11. Verfahren nach einem der Ansprüche 9 oder 10, **dadurch gekennzeichnet, dass** für jedes Befestigungselement das erste Teil (1) mehrere Klebstoffentweichungsöffnungen (13) am Umfang der Bodenseite (7) aufweist, und dass in Schritt b) der Klebstoff aufgetragen wird, bis überschüssiger Klebstoff durch alle der Klebstoffentweichungsöffnungen (13) entweicht.

12. Verfahren nach einem der Ansprüche 9 bis 11, ferner umfassend den Schritt des Aufschnappens eines zweiten Teils (2) an dem ersten Teil (1) jeden Befestigungselements, wobei die zweiten Teile (2) mithilfe einer Schnappverbindungsanordnung (5, 6) an den ersten Teilen (1) befestigbar sind und zum Halten eines Strukturelements an den ersten Teilen vorgesehen sind.

13. Verfahren nach Anspruch 12, **dadurch gekennzeichnet, dass** die Schnappverbindungsanordnung eine Anzahl elastischer Zähne (5) um eine mittige Öffnung in jedem zweiten Teil (2) umfasst, die zum Eingreifen in ein oder mehrere ergänzende Nute (6) an einem aufrechten Stützstift (4) jeden ersten Teils (1) vorgesehen sind, wobei die ergänzenden Nute in unterschiedlichem Abstand zur Bodenseite (7) des ersten Teils (1) vorgesehen sind, und dass das Verfahren ferner den Schritt des Drückens der zweiten Teile nach unten über die ersten Teile zum Anpassen ihrer Positionen an die Stärke der Strukturelemente umfasst.

## Revendications

1. Élément de fixation pour fixer des éléments structurels à une structure de support métallique, plus particulièrement des éléments de garniture intérieure de type plaque ou d'autres éléments intérieurs à une structure de support de véhicule, comprenant au moins une première partie (1) avec un côté inférieur (7) qui est prévu pour être fixé à la structure de support, le côté inférieur (7) étant pourvu d'une ou plusieurs nervures d'espacement (9, 10) qui font saillie du côté inférieur (7) pour maintenir un espace entre le côté inférieur (7) et la structure de support, ledit espace étant prévu pour recevoir une couche de colle, **caractérisé en ce que** la première partie (1) a une ouverture (12) pour l'application de colle par laquelle ledit espace en dessous du côté inférieur est accessible pour appliquer la couche de colle tandis que la première partie (1) de l'élément de fixation est placée sur la structure de support.

2. Élément de fixation selon la revendication 1, **caractérisé en ce que** le côté inférieur (7) et les nervures d'espacement (9, 10) font partie d'une mince plaque (3) dans laquelle l'ouverture (12) pour l'application de colle s'étend depuis le côté supérieur jusqu'au côté inférieur (7).

3. Élément de fixation selon la revendication 1 ou 2, **caractérisé en ce que** les nervures d'espacement (9, 10) sont situées sur le côté inférieur (7) selon un motif prédéterminé pour distribuer uniformément la colle qui est appliquée par l'ouverture (12) pour l'application de colle.

4. Élément de fixation selon l'une quelconque des revendications précédentes, **caractérisé en ce que** la première partie (1) a une pluralité d'ouvertures (13) pour l'échappement de colle à la périphérie du côté inférieur (7) par lesquelles la colle excédentaire peut s'échapper dudit espace.

5. Élément de fixation selon l'une quelconque des revendications précédentes, **caractérisé en ce que** l'élément de fixation comprend en outre une deuxième partie (2) pouvant être fixée à la première partie (1) pour retenir un élément structurel sur la première partie (1), les première et deuxième parties pouvant être fixées l'une à l'autre au moyen d'un agencement à encliquetage (5, 6).

6. Élément de fixation selon la revendication 5, **caractérisé en ce que** ledit agencement à encliquetage comprend une ou plusieurs dents élastiques (5) sur une partie qui sont prévues pour s'engager dans une ou plusieurs gorges complémentaires (6) sur l'autre partie.

7. Élément de fixation selon la revendication 6, **caractérisé en ce que** les dents élastiques (5) sont prévues autour d'une ouverture centrale dans la deuxième partie (2) et **en ce que** la première partie (1) comprend une tige de support verticale (4) sur laquelle une pluralité desdites gorges complémentaires (6) sont prévues à différentes distances du côté inférieur (7) de la première partie (1).

8. Élément de fixation selon la revendication 6 ou 7, **caractérisé en ce que** les dents (5) et gorges (6) sont profilées pour empêcher la deuxième partie (2) de se détacher de la première partie (1).

9. Procédé pour fixer des éléments structurels à une structure de support métallique, plus particulièrement des éléments de garniture intérieure de type plaque ou d'autres éléments intérieurs à une structure de support de véhicule, au moyen d'éléments de fixation qui comprennent chacun au moins une première partie (1) avec un côté inférieur (7) qui est pourvu d'une ou plusieurs nervures d'espacement (9, 10) qui font saillie du côté inférieur (7), **caractérisé en ce qu'**il comprend les étapes consistant à :
a) placer la première partie (1) de chaque élément de fixation avec son côté inférieur (7) sur la structure de support,
b) appliquer de la colle dans l'espace qui est maintenu par les nervures d'espacement (9, 10) entre le côté inférieur (7) et la structure de support jusqu'à ce que ledit espace soit pratiquement rempli complètement de colle,
c) suspendre les éléments structurels sur les premières parties (1) des éléments de fixation.

10. Procédé selon la revendication 9, **caractérisé en ce que** pour chaque élément de fixation, le côté inférieur (7) et les nervures d'espacement (9, 10) font partie d'une mince plaque dans laquelle l'ouverture (12) pour l'application de colle s'étend depuis un côté supérieur jusqu'au côté inférieur (7), et **en ce que**, à l'étape b), la colle est appliquée dans ledit espace par l'ouverture (12) pour l'application de colle.

11. Procédé selon la revendication 9 ou 10, **caractérisé en ce que** pour chaque élément de fixation, la première partie (1) a une pluralité d'ouvertures (13) pour l'échappement de colle à la périphérie du côté inférieur (7) et **en ce que**, à l'étape b), de la colle est appliquée jusqu'à ce que de la colle excédentaire s'échappe par toutes les ouvertures (13) pour l'échappement de colle.

12. Procédé selon l'une quelconque des revendications 9-11, comprenant en outre l'étape consistant à encliqueter une deuxième partie (2) sur la première partie (1) de chaque élément de fixation, lesdites deuxièmes parties (2) pouvant être fixées aux premières parties (1) au moyen d'un agencement à encliquetage (5, 6) et étant prévues pour retenir un élément structurel sur les premières parties.

13. Procédé selon la revendication 12, **caractérisé en ce que** ledit agencement à encliquetage comprend un nombre de dents élastiques (5) autour d'une ouverture centrale dans chaque deuxième partie (2) qui sont prévues pour s'engager dans une d'une pluralité de gorges complémentaires (6) sur une tige de support verticale (4) de la première partie (1), lesdites gorges complémentaires étant prévues à différentes distances du côté inférieur (7) de la première partie (1), et **en ce que** le procédé comprend en outre l'étape consistant à pousser les deuxièmes parties vers le bas sur les premières parties pour adapter leurs positions à l'épaisseur des éléments structurels.
